# EUROPÄISCHE PATENTANMELDUNG

(11) **EP 4 761 469 A1**
(43) Veröffentlichungstag der Anmeldung: **17.06.2026**
(21) Anmeldenummer: 24220003.8
(22) Anmeldetag: 13.12.2024
(51) Int. Cl.: H05B 45/10, G03B 15/03, G06K 7/10, H05B 45/325, H05B 45/33, H05B 45/335, H05B 47/155, H05B 47/165

(54) **VERFAHREN UND BELEUCHTUNGSEINHEIT ZUM AUSLEUCHTEN EINES ERFASSUNGSBEREICHS EINES CODELESEGERÄTS**

(71) Anmelder: VITRONIC Machine Vision GmbH, 65189 Wiesbaden (DE)
(72) Erfinder: HOFFMANN, Burghard, 65232 Taunusstein (DE); SEILLER, Marco, 65366 Geisenheim (DE)
(74) Vertreter: Neumann Müller Oberwalleney Patentanwälte PartG mbB

(57) **Zusammenfassung**

Verfahren zum Ausleuchten eines Erfassungsbereichs eines bildgebenden Sensors mittels einer Beleuchtungseinheit mit zumindest einer Lichtquelle, wobei die Lichtintensität des von der mindestens einen Lichtquelle emittierten Lichts zwischen Lichtpulsintervallen (3), Lichtgrundausleuchtungsintervallen (1) und Lichtpausenintervallen (2, 4) variiert wird,
wobei zeitlich unmittelbar vor und unmittelbar nach einem Lichtimpulsintervall (3) ein Lichtpausenintervall (2, 4) liegt und
wobei jeweils zwischen den Lichtpausenintervallen (2, 4) zwischen zwei Lichtpulsintervallen (3) ein Lichtgrundausleuchtungsintervall (1) liegt, dessen Lichtintensität geringer ist als die Lichtintensität der Lichtpulsintervalle (3).

## Beschreibung

Die Erfindung betrifft ein Verfahren zum Ausleuchten eines Erfassungsbereichs eines bildgebenden Sensors mittels einer Beleuchtungseinheit mit zumindest einer Lichtquelle, wobei die Lichtintensität der mindestens einen Lichtquelle zwischen Lichtpulsintervallen, Lichtgrundausleuchtungsintervallen und Lichtpausenintervallen variiert wird, sowie eine solche Beleuchtungseinheit.

Für gut ausgeleuchtete Bild- und Videoaufnahmen von Kameras mit bildgebenden Sensoren werden Beleuchtungen benötigt, die sehr helles Licht emittieren.

Bei einem beispielhaften Anwendungsfall eines eingangs genannten Verfahrens und einer eingangs genannten Beleuchtungseinheit werden Objekte, die einen Code tragen, an einem Codelesegerät vorbeigeführt, wobei der Code mittels eines bildgebenden Sensors erfasst und durch eine Recheneinheit decodiert wird. Für eine präzise Codeausleuchtung und -erkennung ist eine starke Beleuchtung notwendig, da Umgebungslicht meist nicht ausreicht. Daher sind die Codelesegeräte mit einer besonders hellen Beleuchtung ausgestattet.

Um Bewegungsunschärfe beim Lesen von Codes auf bewegten Objekten zu vermeiden, wird die Beleuchtung in kurzen Pulsen betrieben. Diese Methode spart zudem Energie und reduziert die Wärmeentwicklung. Allerdings kann gepulst betriebene Beleuchtung als Flackern wahrgenommen werden, das für Personen in der Nähe störend oder sogar gesundheitsschädlich sein kann.

Um zu vermeiden, dass das Licht einer gepulst betriebenen Beleuchtungseinheit als Flackern wahrgenommen wird, kann die Beleuchtungseinheit mit einer hohen Pulsfrequenz größer 100 Hz betrieben werden. Ab etwa dieser Pulsfrequenz nimmt das menschliche Auge Lichtpulse nicht mehr wahr und die Beleuchtung erscheint als Dauerlicht. Jedoch führt dies zu einer hohen Belastung der Lichtquellen, wie zum Beispiel LEDs, der Beleuchtungseinheit, wodurch die Lebensdauer der Lichtquellen (LEDs) drastisch reduziert wird.

In der DE 10 2010 050 577 B4 wird eine flackerreduzierte LED-Beleuchtungsvorrichtung beschrieben, die in einem Pulsbetrieb mit Lichtpulsen und Pulspausen betrieben wird, wobei in den Pulspausen eine von Null verschiedene Beleuchtungsintensität erhalten wird, so dass stets eine Grundhelligkeit verbleibt. Die Grundhelligkeit ist hierbei so hoch, dass der Unterschied zu den Lichtpulsen vom menschlichen Auge nicht als störend empfunden wird. Somit verbleibt in den Pulspausen eine Grundhelligkeit und die Beleuchtungsintensität wird nicht auf null gesenkt, sondern bleibt dauerhaft über einem vorbestimmten Wert, sodass bei der Belichtung ein Flackern verringert, jedoch nicht eliminiert wird.

Eine ähnliche Beleuchtungsvorrichtung wird in der US 7 433 590 B2 beschrieben. Hier wird eine gepulste LED-Beleuchtung mit mindestens 60 Hz zeitlich mit einem elektronischen Verschluss einer Kamera synchronisiert. Auch hier verbleibt eine Beleuchtungsintensität in den Pulspausen dauerhaft über null und es dient der Flackerreduzierung.

In DE 103 49 553 B4 wird ein Verfahren zur Helligkeitsregelung und einer dynamischen Farbmischung von LEDs beschrieben, die in einer flächigen Ausleuchtung gleichmäßig in ihrer Helligkeit regelbar sind, wobei die Helligkeitsregelung verschiedener Helligkeitsstufen gleichmäßig und insbesondere im Übergang von 0% auf die unterste Helligkeitsstufe für das menschliche Auge nicht sichtbar erfolgt. Die Regelung der Helligkeit erfolgt hierbei über eine Pulsmodulation in Verbindung mit einer variablen Stromregulierung des Treiberstroms.

Die WO 2013/141876 A2 zeigt ein Beleuchtungssystem eines Codelesegeräts, das eine Ausleuchtung erzeugt, die eine im Wesentlichen kontinuierliche Beleuchtungsperiode und mindestens eine gepulste Beleuchtungsperiode umfasst. In der im Wesentlichen kontinuierlichen Beleuchtungsperiode weist das vom Beleuchtungssystem emittierte Licht eine geringere Lichtintensität auf als in der gepulsten Beleuchtungsperiode. Um Codes verschiedener Quellen, wie etwa auf einem Ausdruck, auf einem LCD-Display oder auf bewegten Gegenständen, optimal abzubilden und decodieren zu können, kann die Auslösezeit (Aufnahmezeit) des bildgebenden Sensors angepasst werden. Nach Ende der Auslösezeit des bildgebenden Sensors werden die Bilddaten ausgelesen, wobei nach dem Auslesen die kontinuierliche Beleuchtungsperiode beendet werden kann, sodass die Lichtintensität auf null abfällt. Während der Auslösezeit findet eine gepulste Beleuchtung mit hoher Lichtintensität statt, an die sich unmittelbar eine kontinuierliche Beleuchtungsperiode mit geringerer Lichtintensität anschließt. Um die Auslösezeit möglichst gering zu halten, ist während der Auslösezeit stets eine Beleuchtung vorhanden.

Aufgabe der vorliegenden Erfindung ist es, eine Beleuchtungseinheit zum Ausleuchten eines Erfassungsbereichs eines bildgebenden Sensors für das menschliche Auge möglichst flackerfrei zu betreiben.

Die Aufgabe wird durch ein Verfahren zum Ausleuchten eines Erfassungsbereichs eines bildgebenden Sensors mittels einer Beleuchtungseinheit mit zumindest einer Lichtquelle, wobei die Lichtintensität des von der mindestens einen Lichtquelle emittierten Lichts zwischen Lichtpulsintervallen, Lichtgrundausleuchtungsintervallen und Lichtpausenintervallen variiert wird, gelöst, wobei zeitlich unmittelbar vor und unmittelbar nach einem Lichtimpulsintervall ein Lichtpausenintervall liegt und wobei jeweils zwischen den Lichtpausenintervallen zwischen zwei Lichtpulsintervallen ein Lichtgrundausleuchtungsintervall liegt, dessen Lichtintensität geringer ist als die Lichtintensität der Lichtpulsintervalle. Das Absenken der Lichtintensität auf null vor und nach dem Lichtpulsintervall führt zu einer flackerfreien Wahrnehmung des Lichts.

Die Lichtintensität des Lichtgrundausleuchtungsintervalls kann dem Mittelwert der Lichtintensität eines Zyklus, also vom Beginn eines Lichtpulsintervalls bis zum Beginn des darauffolgenden Lichtpulsintervalls entsprechen. Hierdurch werden die Lichtpulsintervalle nicht als Flackern wahrgenommen. Alternativ oder zusätzlich kann die Lichtintensität eines Lichtimpulsintervalls und der Lichtpausenintervalle unmittelbar zeitlich vor und nach dem Lichtimpulsintervall dem Mittelwert der Lichtintensität vom Beginn eines Lichtpulsintervalls bis zum Beginn des darauffolgenden Lichtpulsintervalls entsprechen.

Die Lichtintensität während eines Lichtimpulsintervalls kann abnehmen, insbesondere maximal um bis zu 10 % oder maximal um bis zu 20 % der höchsten Lichtintensität.

Die Frequenz der aufeinanderfolgenden Lichtpulsintervalle kann kleiner 60 Hz, insbesondere kleiner 30 Hz betragen.

Die Dauer eines Lichtpulsintervalls kann 500 µs oder kleiner sein.

Die Lichtpausenintervalle unmittelbar vor und unmittelbar nach einem Lichtimpulsintervall können zumindest im Wesentlichen gleich lang sein.

Die Dauer eines Lichtpulsintervalls kann 5 ms oder kleiner sein.

Die mindestens eine Lichtquelle kann mittels einer Treibersteuerung angesteuert werden, wobei die Treibersteuerung zum Ansteuern der zumindest einen Lichtquelle, bei der es sich zum Beispiel um eine LED, eine OLED oder einen Laser handeln kann, ein Treiberstromsignal erzeugt.

Bei der mindestens einen Lichtquelle kann es sich um eine LED oder einen LED-Strang, der eine Mehrzahl von LEDs umfasst, handeln, die im Lichtpulsintervall mit einem Treiberstrom mit einer Stromstärke von 8 A angesteuert wird. Bei einer LED oder einem LED-Strang als Lichtquelle kann die Stromstärke des Treiberstroms für das Lichtgrundausleuchtungsintervall zwischen 150 mA und 450 mA betragen.

Die Beleuchtungseinheit kann mindestens eine erste Lichtquelle und mindestens eine zweite Lichtquelle umfassen, wobei zur Erzeugung des Lichts des Lichtpulsintervalls die mindestens eine erste Lichtquelle und zur Erzeugung des Lichts des Lichtgrundausleuchtungsintervalls die mindestens eine zweite Lichtquelle angesteuert wird.

Die Aufgabe wird ferner durch eine Beleuchtungseinheit zum Ausleuchten eines Erfassungsbereichs eines bildgebenden Sensors gelöst, wobei die Beleuchtungseinheit mindestens eine Lichtquelle, und eine Treibersteuerung zum Ansteuern der mindestens einen Lichtquelle mittels eines Treiberstromsignals umfasst, wobei die Treibersteuerung dazu ausgebildet ist, das Treiberstromsignal zwischen Lichtpulsintervallen, Lichtgrundausleuchtungsintervallen und Lichtpausenintervallen zu variieren. Die Treibersteuerung ist hierbei derart ausgebildet, dass das Treiberstromsignal zeitlich unmittelbar vor und unmittelbar nach einem Lichtimpulsintervall ein Lichtpausenintervall aufweist und dass jeweils zwischen den Lichtpausenintervallen zwischen zwei Lichtpulsintervallen ein Lichtgrundausleuchtungsintervall liegt, in dem die Stromstärke des Treiberstromsignals geringer ist als die Stromstärke des Treiberstromsignals in den Lichtpulsintervallen.

Die mindestens eine Lichtquelle kann hierbei eine LED sein.

Bei allen angegebenen Werten und Parametern gilt eine Abweichung (Toleranz) von bis zu 5 % des angegebenen Werts noch als von der Erfindung umfasst.

Im Folgenden wird die Beleuchtungseinheit in verschiedenen Anwendungen anhand der Zeichungen näher erläutert. Hierin zeigt
- Figur 1: ein schematisches Diagramm der Lichtintensität des Lichts der Beleuchtungseinheit über der Zeit,
- Figur 2: eine schematische Darstellung des Einsatzes einer Beleuchtungseinheit in einem Verkehrsüberwachungssystem und
- Figur 3: eine schematische Darstellung des Einsatzes einer Beleuchtungseinheit in einem Codelesesystem einer Paketsortieranlage.

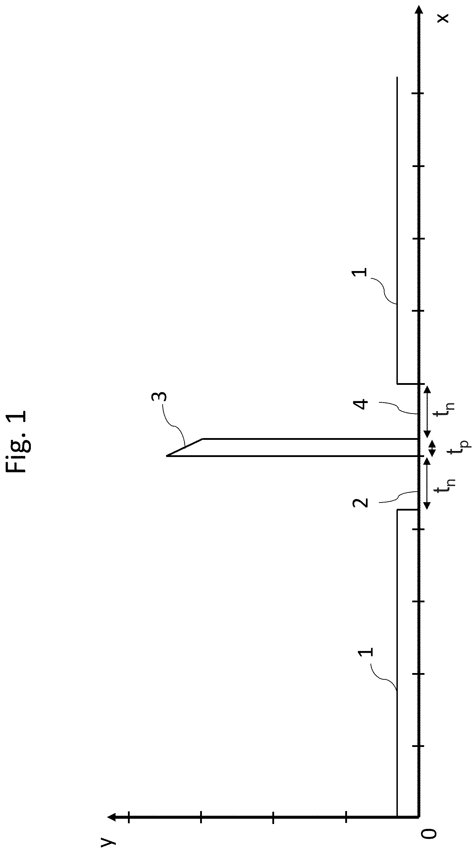

Die Figur 1 zeigt schematisch ein Diagramm der Lichtintensität (Y-Achse) des Lichts der Beleuchtungseinheit über der Zeit (X-Achse).

Beispielhaft wird angenommen, dass die Lichtquelle der Beleuchtungseinheit eine LED ist. Die LED wird gepulst angesteuert, sodass die Lichtintensität des von der LED emittierten Lichts zwischen Lichtpulsintervallen 3, Lichtgrundausleuchtungsintervallen 1 und Lichtpausenintervallen 2 variiert wird. Die Lichtintensität des Lichtgrundausleuchtungsintervalls 1 kann dem Mittelwert der Lichtintensität vom Beginn eines Lichtpulsintervalls 3 bis zum Beginn des darauffolgenden Lichtpulsintervalls 3 entsprechen. Um die mittlere wahrgenommene Helligkeit konstant zu halten, wird die Lichtintensität direkt vor dem Lichtpulsintervall 3 und direkt nach dem Lichtpulsintervall 4 für eine Dauer tₙ eines Lichtpausenintervalls auf null abgesenkt. Die Zeit tₙ vor und nach dem Lichtpulsintervall 3, in der die Lichtintensität auf null abgesenkt wird, ist gleich. Die Dauer tₙ der Lichtpausenintervalle 2, 4 hängt dabei von der Lichtintensität der Lichtgrundausleuchtungsintervalle 1, der Dauer tₚ des Lichtpulsintervalls 3 und der maximalen Lichtintensität des Lichtpulsintervalls 3 ab. Es hat sich eine Dauer tₙ der Lichtpausenintervalle 2, 4 von 5 ms vor und nach dem Lichtpulsintervall 3 mit einem Treiberstrom zum Ansteuern der LED von 8 A und einer Pulszeit von tₚ = 500µs als geeignet herausgestellt, wobei der Treiberstrom zum Ansteuern der LED in den Lichtgrundausleuchtungsintervallen 1 480 mA beträgt. In diesem Beispiel erkennt man im Lichtpulsintervall 3 einen Abfall von 10 bis 20 % der Lichtintensität, dies entspricht einem Temperaturanstieg von ca. 80 K des LED-Chips.

Die Anwendung solcher LED-Beleuchtungen ist für Kameras konzipiert, welche eine Bildwiederholrate von ca. 30 B/s aufweisen. Eine weitere Möglichkeit besteht darin, Einzelpulse bzw. Einzelblitze der LED-Beleuchtung mit einem Trigger auszulösen. Die Pulsfrequenz oder der Einzelpuls der LED-Beleuchtung muss zeitlich mit dem elektronischen Verschluss der Kamera synchronisiert werden. In diesem Fall ist eine niedrige Pulsfrequenz von 30 Hz möglich. Normalerweise würde bei einer Pulsfrequenz von 30Hz ein Lichtflackern wahrnehmbar sein. Durch das Verfahren gemäß der Erfindung wird jedoch kein Lichtflackern wahrgenommen.

In einer LED- Beleuchtungseinheit können eine Vielzahl von LEDs verbaut sein, zum Beispiel können 100 bis 200 LEDs in einer LED- Beleuchtungseinheit verbaut sein.

Anwendungsbeispiele der LED-Beleuchtung für Kameras mit bildgebenden Sensoren sind z. B. Verkehrsüberwachungssysteme, die am Fahrbahnrand oder an Brücken angeordnet sind, zur Überwachung von Fahrzeugen im fließenden Verkehr, sowie Codelesegeräte zum Beispiel in der Logistik.

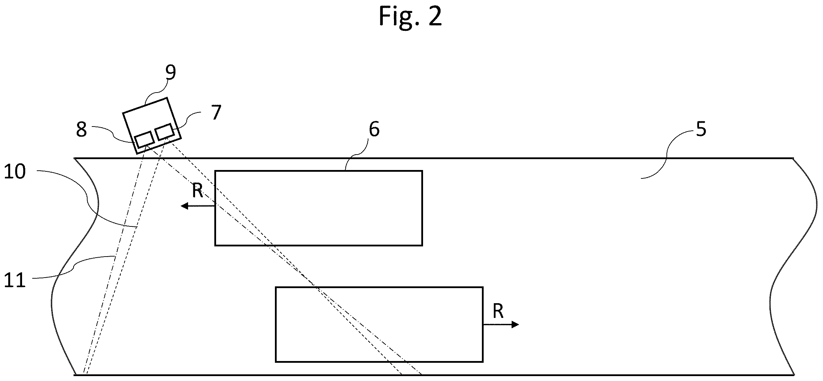

Figur 2 zeigt Fahrzeuge 6, die auf einer Fahrbahn 5 entlang des Richtungspfeils R fahren. An der Seite der Fahrbahn 5 befindet sich ein Verkehrsüberwachungsgerät 9 mit einer Kamera 7 und einer Beleuchtungseinheit 8, wobei das Verkehrsüberwachungsgerät 9 in einem Überwachungsbereich 10 einer Kamera 7 und einem Überwachungsbereich 11 der Beleuchtungseinheit 8 die Fahrzeuge überwacht. Falls z. B. eine Höchstgeschwindigkeit eines Fahrzeugs 6 überschritten wird, löst die Kamera 7 aus, während die Beleuchtungseinheit 8 einen flackerfreien Lichtpuls 3 gemäß Figur 1 auslöst. Direkt vor und nach dem Lichtpuls 3 liegt ein Lichtpausenintervall 2, 4, in dem die Lichtintensität auf null abgesenkt wird. Während die Kamera 7 nicht auslöst, emittiert die Beleuchtungseinheit 8 eine Lichtgrundausleuchtung 1.

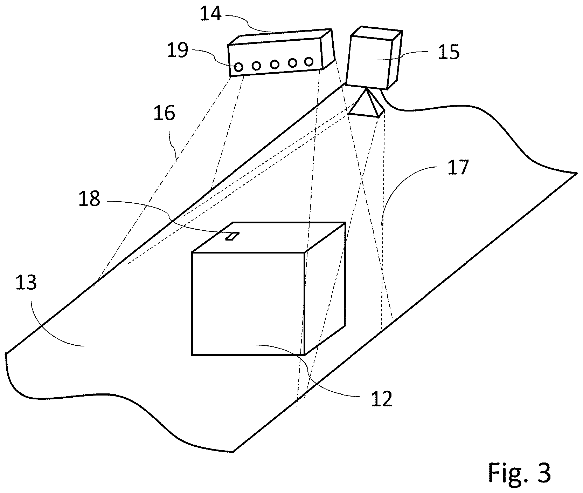

Figur 3 zeigt ein Förderband 13 auf dem Objekte wie z. B. Pakete 12 transportiert werden. Ein Codelesegerät 15 nimmt in einem Überwachungsbereich 17 Aufnahmen von Paketcodes 18 auf und decodiert diese. Eine Beleuchtungseinheit 14, die mehrere hier schematisch angedeutete LEDs 19 umfasst, emittiert innerhalb eines Überwachungsbereichs 16 flackerfreies Licht als Lichtgrundausleuchtungsintervall 1. Während die Kamera des Codelesegerätes ein Bild des Paketcodes 18 aufnimmt, löst ein Lichtpuls 3 aus. Direkt vor und nach dem Lichtpuls 3 liegt ein Lichtpausenintervall 2, 4, in dem die Lichtintensität auf null abgesenkt wird.

### Bezugszeichenliste

- 1: Lichtgrundausleuchtungsintervall
- 2: Lichtpausenintervall
- 3: Lichtpulsintervall
- 4: Lichtpausenintervall
- 5: Fahrbahn
- 6: Fahrzeug
- 7: Kamera
- 8: Beleuchtungseinheit
- 9: Verkehrsüberwachungsgerät
- 10: Überwachungsbereich
- 11: Überwachungsbereich
- 12: Paket
- 13: Förderband
- 14: Beleuchtungseinheit
- 15: Codelesegerät
- 16: Überwachungsbereich
- 17: Überwachungsbereich
- 18: Paketcode
- 19: LED

- tₙ: Dauer eines Lichtpausenintervalls
- tₚ: Dauer des Lichtpulsintervall

## Patentansprüche

1. Verfahren zum Ausleuchten eines Erfassungsbereichs eines bildgebenden Sensors mittels einer Beleuchtungseinheit mit zumindest einer Lichtquelle, wobei die Lichtintensität des von der mindestens einen Lichtquelle emittierten Lichts zwischen Lichtpulsintervallen (3), Lichtgrundausleuchtungsintervallen (1) und Lichtpausenintervallen (2, 4) variiert wird,
**dadurch gekennzeichnet,**
**dass** zeitlich unmittelbar vor und unmittelbar nach einem Lichtimpulsintervall (3) ein Lichtpausenintervall (2, 4) liegt und
**dass** jeweils zwischen den Lichtpausenintervallen (2, 4) zwischen zwei Lichtpulsintervallen (3) ein Lichtgrundausleuchtungsintervall (1) liegt, dessen Lichtintensität geringer ist als die Lichtintensität der Lichtpulsintervalle (3).

2. Verfahren nach Anspruch 1,
**dadurch gekennzeichnet,**
**dass** die Lichtintensität des Lichtgrundausleuchtungsintervalls (1) dem Mittelwert der Lichtintensität entspricht und/oder
**dass** die Lichtintensität eines Lichtimpulsintervalls (3) und der Lichtpausenintervalle (2, 4) zeitlich unmittelbar vor und nach dem Lichtimpulsintervall (3) dem Mittelwert der Lichtintensität entspricht.

3. Verfahren nach Anspruch 1 oder 2,
**dadurch gekennzeichnet,**
**dass** die Lichtintensität während eines Lichtimpulsintervalls (3) abnimmt.

4. Verfahren nach Anspruch 3,
**dadurch gekennzeichnet,**
**dass** die Lichtintensität während eines Lichtimpulsintervalls (3) maximal um bis zu 10 % oder maximal um bis zu 20 % abnimmt.

5. Verfahren nach einem der Ansprüche 1 bis 4,
**dadurch gekennzeichnet,**
**dass** die Frequenz der aufeinanderfolgenden Lichtpulsintervalle (3) kleiner 60 Hz oder kleiner 30 Hz beträgt.

6. Verfahren nach einem der Ansprüche 1 bis 5,
**dadurch gekennzeichnet,**
**dass** die Dauer eines Lichtpulsintervalls (3) kleiner 500 µs ist.

7. Verfahren nach einem der Ansprüche 1 bis 6,
**dadurch gekennzeichnet,**
**dass** die Lichtpausenintervall (2, 4) unmittelbar vor und unmittelbar nach einem Lichtpulsintervall (3) zumindest im Wesentlichen gleich lang sind.

8. Verfahren nach einem der Ansprüche 1 bis 7,
**dadurch gekennzeichnet,**
**dass** die Dauer eines Lichtpausenintervalls (2, 4) kleiner 5 ms ist.

9. Verfahren nach einem der Ansprüche 1 bis 8,
**dadurch gekennzeichnet,**
**dass** die mindestens eine Lichtquelle mittels einer Treibersteuerung angesteuert wird, wobei die Treibersteuerung zum Ansteuern der mindestens einen Lichtquelle ein Treiberstromsignal erzeugt.

10. Verfahren nach Anspruch 9,
**dadurch gekennzeichnet,**
**dass** die mindestens eine Lichtquelle eine LED oder ein LED-Strang ist, die im Lichtpulsintervall (3) mit einem Treiberstrom mit einer Stromstärke von 8 A angesteuert wird.

11. Verfahren nach Anspruch 9 oder 10,
**dadurch gekennzeichnet,**
**dass** die mindestens eine Lichtquelle eine LED oder ein LED-Strang ist, die im Lichtgrundausleuchtungsintervall (1) mit einem Treiberstrom mit einer Stromstärke zwischen 150 mA und 450 mA angesteuert wird.

12. Verfahren nach einem der Ansprüche 1 bis 11,
**dadurch gekennzeichnet,**
**dass** die Beleuchtungseinheit mindestens eine erste Lichtquelle und mindestens eine zweite Lichtquelle umfasst, wobei zur Erzeugung des Lichts des Lichtpulsintervalls (3) die mindestens eine erste Lichtquelle und zur Erzeugung des Lichts des Lichtgrundausleuchtungsintervalls (1) die mindestens eine zweite Lichtquelle angesteuert wird.

13. Beleuchtungseinheit zum Ausleuchten eines Erfassungsbereichs eines bildgebenden Sensors umfassend:
mindestens eine Lichtquelle,
eine Treibersteuerung zum Ansteuern der mindestens einen Lichtquelle mittels eines Treiberstromsignals, wobei die Treibersteuerung dazu ausgebildet ist,
das Treiberstromsignal zwischen Lichtpulsintervallen (3), Lichtgrundausleuchtungsintervallen (1) und Lichtpausenintervallen (2, 4) zu variieren,
**dadurch gekennzeichnet,**
**dass** die Treibersteuerung derart ausgebildet ist, dass das Treiberstromsignal zeitlich unmittelbar vor und unmittelbar nach einem Lichtimpulsintervall (3) ein Lichtpausenintervall (2, 4) aufweist und dass jeweils zwischen den Lichtpausenintervallen (2, 4) zwischen zwei Lichtpulsintervallen (3) ein Lichtgrundausleuchtungsintervall (1) liegt, in dem die Stromstärke des Treiberstromsignals geringer ist als die Stromstärke des Treiberstromsignals in den Lichtpulsintervallen (3).

14. Beleuchtungseinheit nach Anspruch 13,
**dadurch gekennzeichnet,**
**dass** die mindestens eine Lichtquelle eine LED ist.
